# EUROPÄISCHE PATENTSCHRIFT

(11) **EP 1 076 617 B1**
(45) Veröffentlichungstag und Bekanntmachung des Hinweises auf die Patenterteilung: **23.04.2003**
(21) Anmeldenummer: 99923559.1
(22) Anmeldetag: 08.05.1999
(51) Int. Cl.: B60M 1/20

(54) **TRÄGER- UND BEFESTIGUNGSANORDNUNG FÜR FAHRDRÄHTE**
SUPPORTING AND FASTENING DEVICE FOR CONTACT WIRES
DISPOSITIF DE SUPPORT ET DE FIXATION POUR CONDUCTEURS AERIENS

(30) Priorität: 08.05.1998 DE 19820598
(43) Veröffentlichungstag der Anmeldung: 21.02.2001
(73) Patentinhaber: Kummler+Matter AG, CH-8026 Zürich (CH)
(72) Erfinder: HÜGLI, Reto, CH-8046 Zürich (CH); GARCIA, Manuel, José, CH-8352 Räterschen (CH)
(74) Vertreter: Behrmann, Niels, Dipl.-Ing.
(86) Internationale Anmeldenummer: EP9903166
(87) Internationale Veröffentlichungsnummer: WO99058362

(56) Entgegenhaltungen:
- EP-A- 0 607 830
- FR-A- 2 734 957

## Beschreibung

Die vorliegende Erfindung betrifft eine Träger- und Befestigungsanordnung für Fahrdrähte. Derartigen Vorrichtungen sind beispielsweise als Auslegersysteme für Fahrleitungen, etwa im öffentlichen Personennahverkehr, allgemein bekannt und druckschriftlich z.B. in der EP 0 679 127 B1 beschrieben.

Durch die vielfältigen Einsatzmöglichkeiten von Auslegersystemen für Fahrdrähte und die große Vielfalt spezifischer Anforderungen, Systeme und Einsatzbereich ist üblicherweise jedoch eine große Typenvielfalt von Einzelkomponenten entsprechend einem jeweiligen Einsatzzweck erforderlich, die insbesondere bei Herstellern mit einem breiten Angebotssortiment das Produzieren und Vorhalten einer großen Typenvielfalt erfordert. Damit werden dann spezifisch zusammengestellte Systeme -- trotz der hohen Gesamtstückzahl -- notwendigerweise aufwendig und damit kostenträchtig.

Auch sind aus dem Stand der Technik zahlreiche Varianten von Träger- und Befestigungsanordnungen für Fahrdrähte bekannt, die aufgrund der mechanischen Gegebenheiten oftmals recht aufwendige Verbindungen, insbesondere auch Schraubverbindungen, erfordern, und die daher in Installation, Montage und Wartung entsprechenden Aufwand verursachen.

Angesichts dieser Ausgangslage ist es daher Aufgabe der vorliegenden Erfindung, eine Träger- und Befestigungsanordnung für Fahrdrähte, insbesondere als Auslegersystem, zu schaffen, welches auf der Basis von konstruktiv einfachen, flexibel und variabel einzusetzenden Komponenten einen Einsatz in verschiedensten Varianten ermöglicht, und welche darüber hinaus im Hinblick auf die notwendigen mechanischen Kupplungs- bzw. Verbindungseigenschaften leicht montierbar und trotzdem stabil ist.

Die Aufgabe wird durch die Träger- und Befestigungsanordnung mit den Merkmalen des Patentanspruchs 1 sowie die Vorrichtung nach dem Patentanspruch 14 gelöst.

Das erfindungsgemäße Trägerstück sowie das damit zusammenwirkende Kupplungselement als Kernelemente dieser erfindungsgemäßen Träger- und Befestigungsanordnung ermöglichen zur Lösung der Aufgabe einen fast beliebigen Einsatz der Anordnung, wobei das Trägerstück sowohl selbst universell festleg- bzw. befestigbar ist, als auch zum einfachen, verdrehsicheren und formschlüssigen Aufnehmen mindestens eines Kupplungspartners geeignet ist, wobei besonders vorteilhaft die Steckverbindung bereits allein aufgrund einer angreifenden Zug- bzw. Druckbelastung eine sichere mechanische Kupplung ermöglicht.

Unabhängiger Schutz im Rahmen der vorliegenden Erfindung wird zudem beansprucht für ein Kupplungselement, das sich zwar insbesondere vorteilhaft zur Verwendung in der Träger-Befestigungsanordnung eignet, losgelöst von diesem aber auch isoliert zur selbständigen Befestigung an einem Mast bzw. Rohr geeignet ist. In überraschend einfacher und konstruktiv eleganter Weise sorgt nämlich die rückseitig ausgebildete, bevorzugt stumpf V-förmige Einformung dafür, dass das einstückig hergestellte Kupplungselement an zylindrische Träger nahezu beliebigen Durchmessers zur Fixierung angesetzt werden kann, wobei die ansitzenden Befestigungsabschnitte dann in besonders einfacher Weise als Auflagen für geeignete Befestigungsmittel, insbesondere in Form von Streifen, Bändern oder dergl., dienen.

Vorteilhafte Weiterbildungen der Erfindung sind in den Unteransprüchen beschrieben.

So ist es besonders bevorzugt, das langgestreckte Trägerstück als Doppel-T-Profil auszubilden und mit mindestens einem zusätzlichen Langloch zu versehen, wobei besonders geeignet der erste Durchbruch und ein derartiges Langloch zum unmittelbaren verdrehsicheren Aufnehmen von Gabelund/oder Laschenelementen -- die insoweit als Kupplungselement im Sinne des Hauptanspruchs anzusehen sind -- ausgebildet sind. In diesem Zusammenhang ist sowohl der Laschenabschnitt des Laschenelements als auch ein Gabelabschnitt des Gabelelements als Vorsprung im Sinne des Hauptanspruches anzusehen.

Besonders bevorzugt ist es zudem, das Kupplungselement als Aufnahmehalter zum Einführen bzw. Halten des Trägerelements auszubilden, wobei dann der Aufnahmehalter insbesondere die Möglichkeit zum Ausbilden einer Gelenkverbindung schafft.

Die im Rahmen der vorliegenden Erfindung verwendbare Gabelund/oder Laschenelemente erhöhen die universelle Verwendbarkeit der erfindungsgemäßen Träger- und Befestigungsanordnung; so ermöglichen diese jeweils nicht nur eine Verbindung miteinander -- d. h. ein Laschenelement greift in ein Gabelelement ein --, auch ist über diese Kupplungselemente jeweils ein Rohrende, Isolator od. dgl. ankoppelbar.

Besonders bevorzugt ist es zudem, mehrere Kupplungselemente gleichzeitig an einem Trägerstück zu befestigen.

Im Ergebnis entsteht somit eine Anordnung, die eine einfache Montierbarkeit -- insbesondere für eine Verbindung mit dem zentralen Durchbruch sind keinerlei Schraubverbindungen od. dgl. erforderlich -- mit hoher mechanischer Festigkeit und größtmöglicher Flexibilität zum Aufbau nahezu beliebiger Auslegersysteme kombiniert.

Weitere Vorteile, Merkmale und Einzelheiten der erfindungsgemäßen Träger- und Befestigungsanordnung für stromführende Fahrdrähte ergibt sich aus der nachfolgenden Beschreibung bevorzugter Ausführungsbeispiele sowie anhand der Zeichnungen; diese zeigen in
- Fig. 1:: eine Perspektivansicht einer Drehgelenkanordnung als zentralem Element der erfindungsgemäßen Träger- und Befestigungsanordnung gemäß einer ersten, bevorzugten Ausführungsform mit gegenüber einem horizontalen Mast-Trägerstück axial versetztem Drehgelenk;
- Fig. 2:: eine schräge, perspektivische Draufsicht auf die Drehgelenkanordnung der Fig. 1;

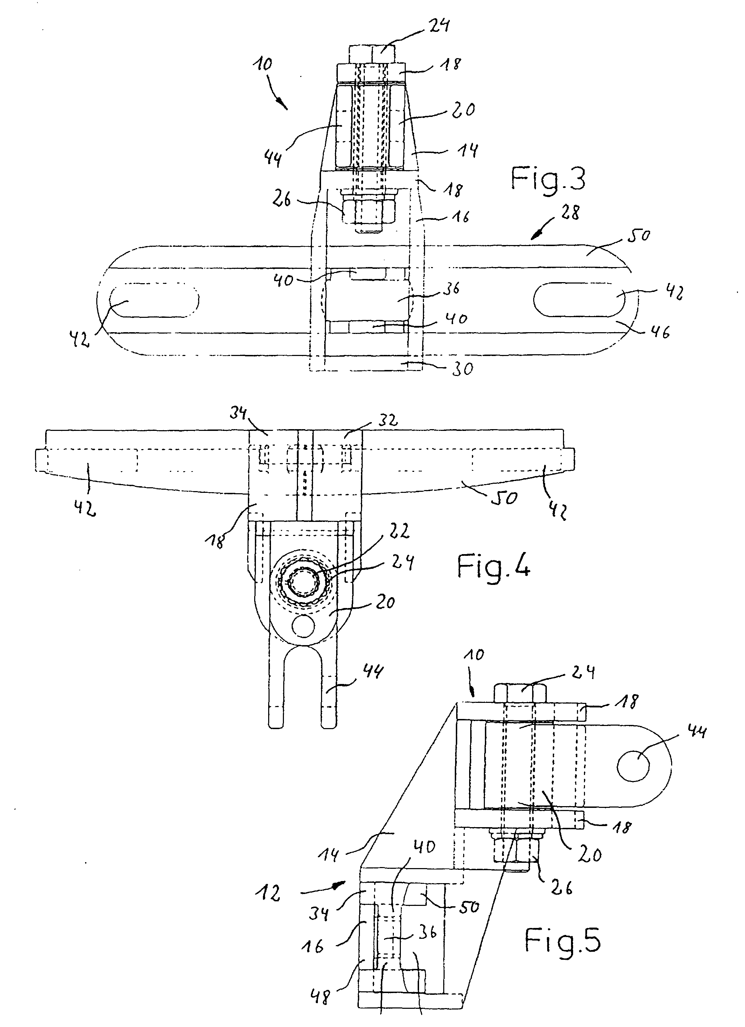

- Fig. 3 - 5 :: weitere Ansichten der Drehgelenkanordnung gemäß Fig. 1, 2;
- Fig. 6:: eine Explosionsdarstellung der Anordnung gemäß Fig. 1 mit wesentlichen Einzelkomponenten sowie deren Zusammenwirken relativ zueinander;
- Fig. 7:: eine perspektivische Seitenansicht einer Drehgelenkanordnung als Bestandteil der erfindungsgemäßen Träger- und Befestigungsanordnung gemäß einer zweiten Ausführungsform der Erfindung mit auf der Höhe eines MastTrägerstücks angeordnetem Drehgelenk;
- Fig. 8:: eine schräge, perspektivische Draufsicht auf die Drehgelenkanordnung gemäß Fig. 7;
- Fig. 9 - 11:: weitere Ansichten der Drehgelenkanordnung gemäß Fig. 7,8;
- Fig. 12:: eine Explosionsdarstellung der Drehgelenkanordnung gemäß Fig. 7 mit den Funktionselementen und deren Relativanordnung zueinander;
- Fig. 13:: eine Explosionsdarstellung eines Rohradapters gemäß einer dritten Ausführungsform der Erfindung, der insbesondere auch zur Verwendung im Zusammenhang mit den Drehgelenken der ersten und zweiten Ausführungsform einzusetzen ist;
- Fig. 14:: eine perspektivische Seitenansicht eines Rohradapters gemäß Fig. 13 zur Verbindung mit einem Strebenrohr großen Durchmessers;
- Fig. 15:: ein Rohradapter gemäß Fig. 13, 14 für ein Strebenrohr mittleren Durchmessers, wobei diese Fig. eine alternative Ausbildung mit einer Lasche (Lappen) als Verbindungselement zeigt;
- Fig. 16:: ein Rohradapter gemäß Fig. 13 bis 15 für Strebenrohre geringen Rohrdurchmessers;
- Fig. 17 - 19:: Seitenansichten der Rohradapter gemäß Fig. 14 bis 16;
- Fig. 20:: eine vierte Ausführungsform der vorliegenden Erfindung mit einem Mast-Trägerteil, in welches unmittelbar eine Gabel zur Verbindung mit einem Rohradapter od. dgl. eingesetzt ist;
- Fig. 21, 22:: weitere Ansichten des Mast-Trägerteils in Fig. 20;
- Fig. 23:: eine Explosionsdarstellung des Mast-Trägerteils mit davon getrennt gezeigtem Gabelstück;
- Fig. 24:: eine alternative Ausbildung des Mast-Trägerteils der vierten Ausführungsform, die, alternativ zur Darstellung der Fig. 20, einen Lappen (eine Lasche) als Verbindungselement aufweist;
- Fig. 25, 26:: weitere Ansichten der Ausbildung gemäß Fig. 24;
- Fig. 27:: eine Explosionsdarstellung der Anordnung gemäß Fig. 24 mit getrennt von dem Mast-Trägerteil dargestelltem Lappen- bzw. Laschenelement;
- Fig. 28:: eine fünfte Ausführungsform der Erfindung mit einem Mast-Trägerteil, zentraler Anschlußgabel sowie einem Paar von Anschlußlappen;
- Fig. 29:: eine andere Perspektivdarstellung der Ausführungsform gemäß Fig. 28;
- Fig. 30, 31:: weitere Ansichten der Ausführungsform gemäß Fig. 28;
- Fig. 32:: eine zu Fig. 28 äquivalente Realisierungsform der fünften Ausführungsform mit einem zentralen Lappenelement und einem Paar von Gabelelementen;
- Fig. 33:: eine weitere Perspektivansicht der Ausführungsform gemäß Fig. 32;
- Fig. 34, 35:: zusätzliche Ansichten der Ausführungsform gemäß Fig. 32;
- Fig. 36:: eine Explosionsdarstellung der Anordnung der fünften Ausführungsform gemäß Fig. 32 bis 35;
- Fig. 37a,b: : eine Darstellung eines Rohrverbinders zur Verwendung in einer sechsten Ausführungsform der vorliegenden Erfindung mit alternativ dargestellter Verbindungsgabel bzw. -lasche;
- Fig. 38a, b :: eine Explosionsdarstellung der Ansicht gemäß Fig. 37 mit den Funktionselementen sowie deren Verbindung miteinander;
- Fig. 39, 40:: weitere Ansichten der Ausführungsform gemäß Fig. 37;
- Fig. 41:: eine Explosionsdarstellung analog Fig. 6 einer siebten Ausführungsform der Erfindung insbesondere mit einer alternativen Ausgestaltung des Kupplungselements;
- Fig. 42:: eine Explosionsdarstellung analog Fig. 12 einer achten Ausführungsform der Erfindung mit gegenüber der Fig. 12 alternativem Kupplungselement;
- Fig. 43:: eine Darstellung analog Fig. 7 der achten Ausführungsform im zusammengesteckten Zustand der Einzelelemente;
- Fig. 44:: eine perspektivische Ansicht analog Fig. 20 mit einer alternativen Ausführung des Gabelelements;
- Fig. 45:: eine Explosionsdarstellung der Anordnung gem. Fig. 44 und
- Fig. 46a,b :: zwei um 90° verdrehte Ansichten des alternativen Gabelstücks (Fig. 44, Fig. 45) mit bodenseitiger Innengewindebefestigung an einem Rohradapter.

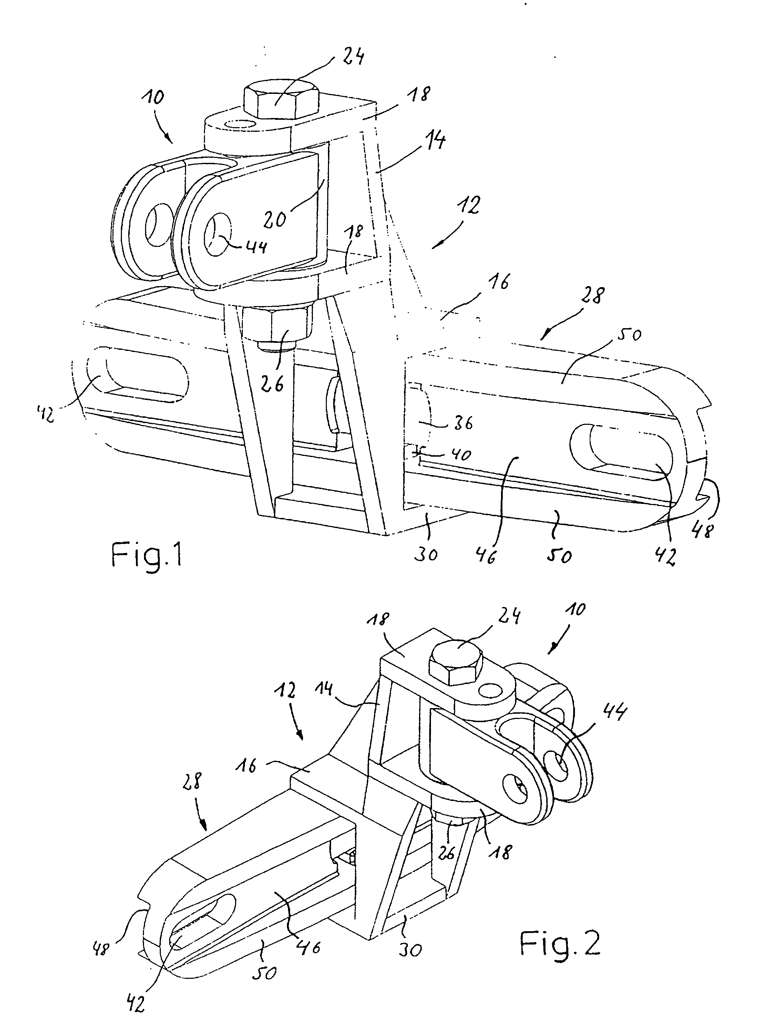

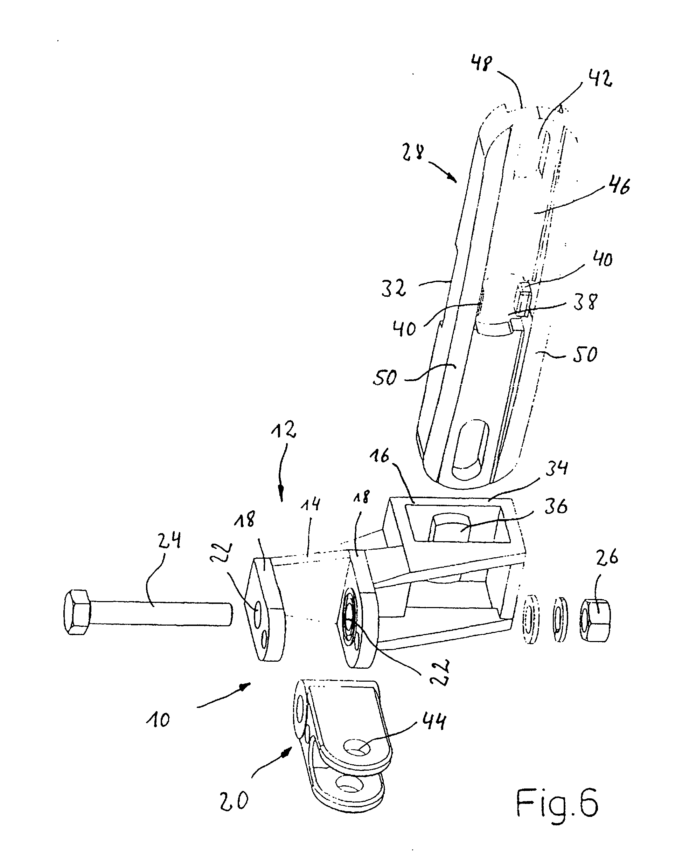

Fig. 1 zeigt in der perspektivischen Vorderansicht eine Drehgelenkanordnung, wie sie zur Verbindung eines mit einem Drehgelenk 10 gekoppelten, in der Figur nicht gezeigten Druck-Strebenrohres mit einem Mast vorgesehen ist. Die gezeigte Anordnung weist zu diesem Zweck, wie insbesondere aus der Explosionsdarstellung der Fig. 6 erkennbar ist, als zentrales Verbindungsstück einen Aufnahmehalter 12 auf, der im oberen Bereich eine jochförmige Gelenkaufnahme (Gelenkabschnitt) 14 ausbildet, an welche sich ein kastenförmiger Aufnahmeabschnitt 16 einstückig anschließt.

Der Aufnahmehalter 12 ist bevorzugt einstückig aufgebaut und als Guß- bzw. Frästeil realisiert.

Ein Paar einander gegenüberliegender Schenkelabschnitte 18 der Gelenkaufnahme 14 bilden zusammen mit einem Gabelgelenkstück 20 das Drehgelenk 10 aus, welches um eine Gelenkachse schwenkbar ist, die durch eine durch Gelenklöcher 22 in den Schenkelabschnitten 18 geführte Gelenkbolzen 24 (anderenends durch eine Gelenkmutter 26, alternativ Splint, gesichert) realisiert ist. An die sich im montierten Zustand horizontal erstreckende Gabel des Gelenkstücks 20 ist dann ein (Druck-) Strebenrohr anschließbar, wie im weiteren noch zu beschreiben sein wird.

Andernends weist der Aufnahmehalter 12 im montierten Zustand ein sich horizontal erstreckendes (Mast-) Trägerstück 28 auf, welches im Profil so bemessen ist, daß es in den kastenförmigen Innenraum des Aufnahmeabschnitts 16 einschiebbar ist. Genauer gesagt ruht im eingeschobenen Zustand das Trägerstück 28 mit seiner abwärts gerichteten Schmalseite auf einer Bodenplatte 30 des Aufnahmeabschnitts 16 und wird durch diese geführt; seinen festen Halt in senkrechter Richtung zur Einschubrichtung erhält das Trägerstück 28 bei Zug- bzw. Druckbelastung durch eine gefräste vertikale Ausnehmung 32 im rückwärtigen Bereich der Flachseite, die zum Umfassen eines Rückwandabschnittes 34 des Aufnahmehalters 12 bemessen ist. Mit anderen Worten, im eingeschobenen Zustand des Trägerstücks 28 und bei Druckbelastung der Anordnung fixiert die Ausnehmung 32 das Trägerstück 28 bündig in seiner Einschubposition relativ zum Aufnahmehalter 12.

Zusätzliche Fixierung ergibt sich durch einen annähernd quaderförmigen, jedoch mit leicht gerundeten Stirnflächen versehenen Vorsprung 36, der einstückig aus einem Rückwandabschnitt 34 herausgebildet und in seinen Umfangsabmessungen so bemessen ist, daß er in einen mittig im Trägerstück 28 vorgesehenen Durchbruch 38, der eine angepaßte Umfangskontur aufweist, eingreifen kann. Schließlich sind im Durchbruch 38 noch noppenartige Vorsprünge 40 an einandergegenüberliegenden Querseiten des Durchbruchs 38 vorgesehen, die der Montageerleichterung und ergänzenden Fixierung des Trägerstück -- welches i. ü. auch als "Mastbride" bezeichnet wird -- dienen.

Auf die gezeigte Art ist somit eine feste Verbindung zwischen dem Trägerstück 28 und dem Aufnahmehalter 12, mithin also auch zum an die Gelenkaufnahme 14 angelenkten Druck-Strebenrohr gegeben, welches -- über die gezeigten mechanischen Kopplungselemente hinaus -- keinerlei weiteren Befestigungselemente benötigt, insbesondere keine zusätzliche Verschraubung. Vorteilhaft erfolgt nämlich die Fixierung ausschließlich durch die vom Strebenrohr in das Drehgelenk eingeleitete Druckkraft und wird so in den Mast eingetragen; in der gezeigten Weise wirkt damit das Druck-Strebenrohr über die horizontale Gabel 20 direkt auf endseitig im Trägerstück 28 vorgesehene Langlöcher 42, wobei weiter bevorzugt die von Gabellöchern 44 ausgehende Kraftlinie in einem Winkel von ca. 35° zu den Langlöchern 42 verläuft.

Weitere konstruktive Details des Trägerstücks 28 ergeben sich insbesondere aus der Explosionsdarstellung der Fig. 6, so etwa der leicht gerundete Verlauf der beidseitig einem vorderen (46) und einem hinteren (48) Längsschlitz angeordneten (Quer-) Seitenabschnitte 50, womit das Trägerstück 28 im Profil (vgl. Fig. 5) eine leichte Doppel-T-Form erhält und damit geringes Gewicht mit maximaler Stabilität für den gezeigten Krafteintrag kombiniert.

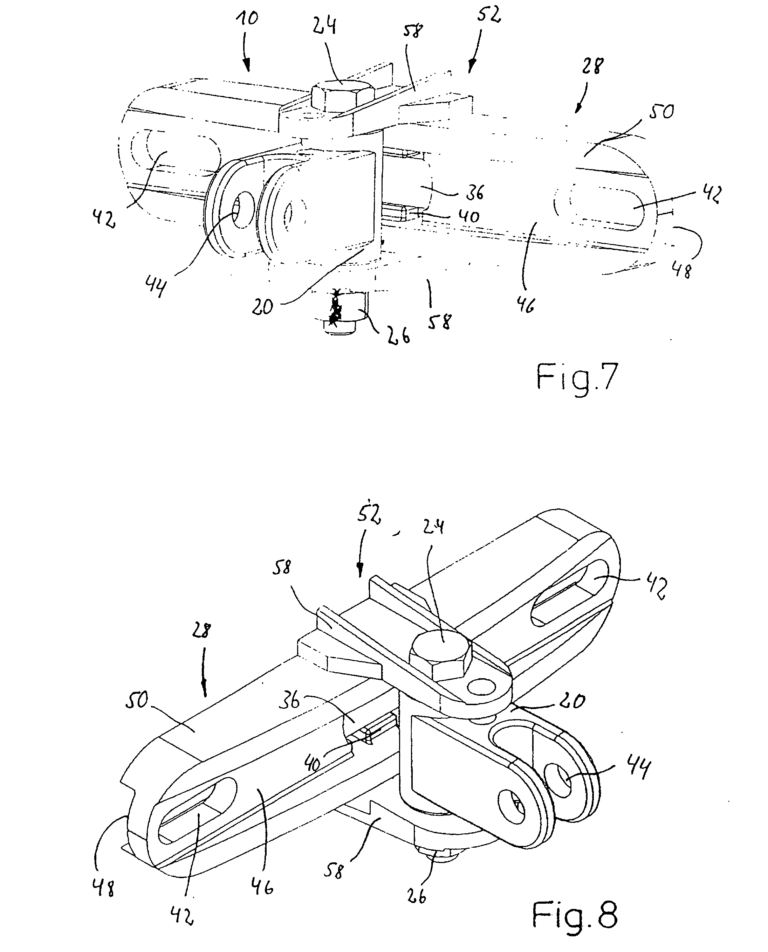

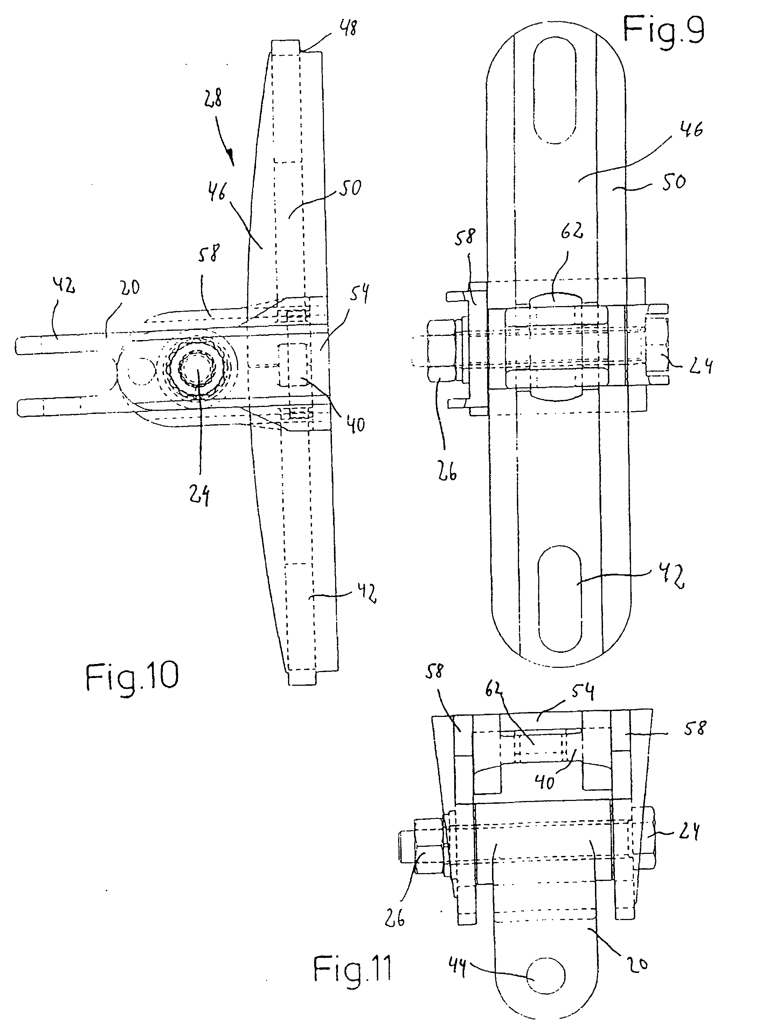

Unter Bezug auf die Fig. 7 bis 12 wird nunmehr eine gegenüber der ersten Ausführungsform leicht modifizierte Ausbildung der Drehgelenkanordnung beschrieben.

Der zentrale Unterschied der zweiten Ausführungsform liegt in der veränderten Gestaltung des Aufnahmehalters 12, welcher bei der zweiten Ausführungsform gemäß Fig. 7 bis 12 als i. w. U- bzw. jochförmiger Halter 52 realisiert ist, der aus einer einstückig gebildeten Anordnung aus Rückwand 54 und einem Paar beidseitig ansetzender, mit zusätzlichen seitlichen Verstärkungsstreben versehener Schenkelstücke 58 besteht; diese Schenkelstücke bilden dann Gelenklöcher 22 für die Gelenkbolzen 24 aus, die, wie am ersten Ausführungsbeispiel bereits beschrieben, dann das Gabelgelenkstück 20 um die Achse des Bolzens 24 schwenkbar führt.

Wiederum weist bei dieser zweiten Ausführungsform das Trägerstück 28 zur Fixierung am U-Halterstück 52 einen rückwärtigen Schlitz (Ausnehmung) 32 auf, und der -- ergänzend mit Noppen 40 versehene -- Durchbruch 38 greift fixierend auf einen Vorsprung 62 auf der Rückwand 54, der analog dem Vorsprung 36 bei der ersten Ausführungsform gebildet ist.

Im Ergebnis wirkt auch diese Anordnung, bei welcher das Drehgelenk 10 und das Trägerstück 28 für die Mastbefestigung in einer horizontalen Ebene liegen, eine exakte Fixierung der Teile zueinander ohne die Notwendigkeit zusätzlicher Schraubbefestigungen od. dgl., wobei die zweite Ausführungsform der Fig. 7 bis 12 eine etwas kompaktere Realisierung der Gesamtanordnung ermöglicht. Insbesondere die Fig. 7 und 8 verdeutlichen noch einmal den Klemmzustand von Halter 52 und Trägerstück 28 relativ zueinander, wobei gut erkennbar ist, wie die noppenartigen Vorsprünge 40 im zentralen Durchbruch 38 des Trägerstücks 28 mit dem Vorsprung 62 des Halters 52 zusammenwirken.

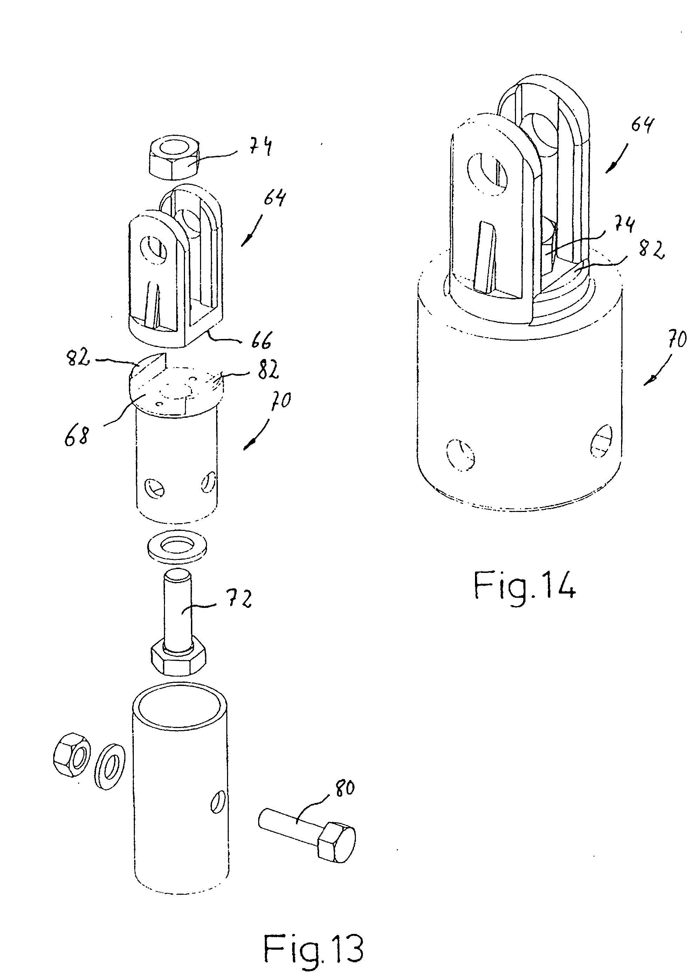

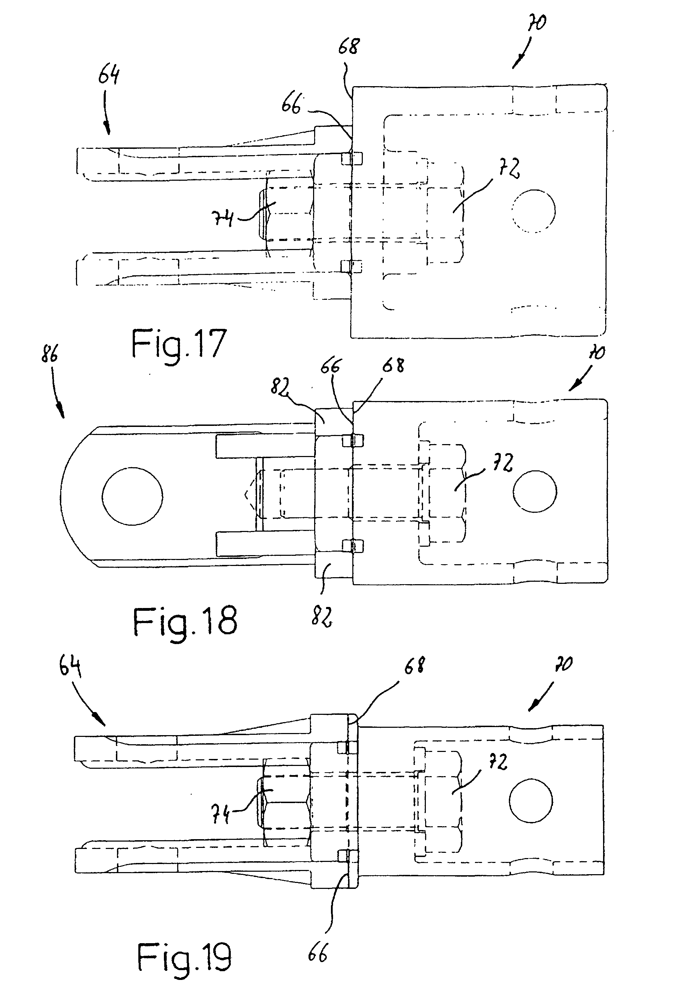

Unter Bezug auf die Fig. 13 bis 19 wird nachfolgend ein Rohradapter für die Anwendung in einer dritten Ausführungsform der vorliegenden Erfindung beschrieben, wobei ein solcher Rohradapter zum Ankoppeln eines Rohrendes, beispielsweise eines Druck-Strebenrohres, an ein Drehgelenk 10 der vorbeschriebenen Anordnungen geeignet ist. Grundsätzlich wirken bei der Verbindung Gabel- und Laschen- (Lappen-) Elemente durch gelenkweises Ineinandergreifen zusammen, wobei für die vorliegende Erfindung grundsätzlich Gabelelemente und Lappen- bzw. Laschenelemente als Äquivalent anzusehen und im Bedarfsfall austausch- bzw. anpaßbar sind.

Die Explosionsdarstellung der Fig. 13 verdeutlicht den prinzipiellen Aufbau eines solchen Rohradapters. Ein Gabelstück (alternativ: ein Lappen- bzw. Laschenstück) 64 wird mit seinem planen Rückwandabschnitt 66 auf die Stirnfläche einen herausgefrästen, planen Stirnflächenabschnitt 68 einer Rohrmuffe 70 mittels einer von innen durch einen mittleren Durchbruch der Fläche 68 greifende Befestigungsschraube 72 befestigt, wobei die Rohrmuffe 70, beispielsweise eines Druck-Strebenrohres, aufsitzt und mittels einer primär der Verdrehsicherung und der Befestigung dienenden Querschraube 80 (bzw. einem Querbolzen) gesichert wird.

Ein solcher Rohradapter eignet sich insbesondere für gängige Rohrdurchmesser, wobei etwa der kleinste Adapter einen Innendurchmesser von 1" aufweist und damit auch für die Aufnahme eines Spurhalterrohres mit Durchmesser 1" eingesetzt werden kann.

Bei der gezeigten Rohrmuffe 70 weist zudem der Stirnflächenabschnitt 68 zwei durch den Fräsvorgang verbliebene Stegwände 82 auf, die ebenso wie der Querbolzen 80, der Verdrehsicherung dienen.

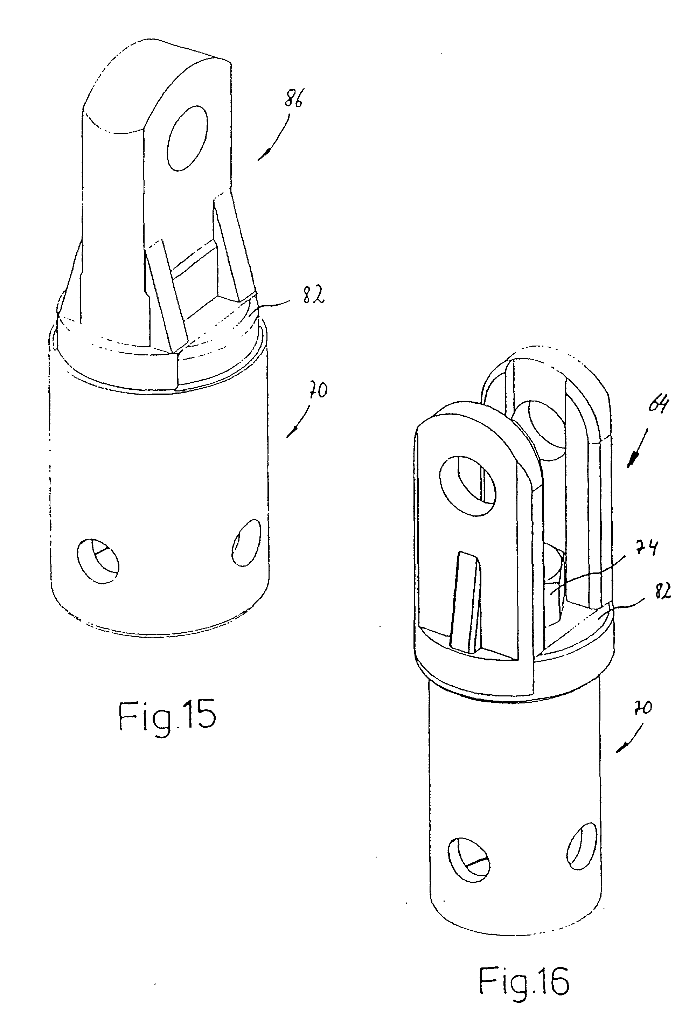

Die in den Fig. 14 bis 16 für verschiedene Rohrinnendurchmesser gezeigten Rohradapter werden dann zur Kupplung eines entsprechend eingesetzten Rohres mit einem Kupplungspartner, etwa in Form des vorbeschriebenen Gelenkstückes, verwendet, wobei etwa der in Fig. 15 gezeigt endseitige Laschenabschnitt dann in geeigneter Weise mit einem Gabelabschnitt am Kupplungspartner zusammenwirkt, oder umgekehrt.

Die gezeigte Adapteranordnung zeichnet sich dabei durch ein hohes Maß an mechanischer Stabilität bei gleichzeitiger konstruktiver und herstellungstechischer Einfachheit aus, so daß durch diese Anordnung in einfacher Weise ein belastbares, zuverlässiges und doch kostengünstiges Auslegersystem realisierbar ist.

Dabei ist selbstverständlich die Ausbildung der Rohrmuffen 70 für den Rohradapter nicht auf die angegebenen Normgrößen für die Rohrenden beschränkt, sondern im Grundsatz eignet sich diese Ausbildung für beliebige Innen- bzw. Außendurchmesser der zu kuppelnden Rohrenden.

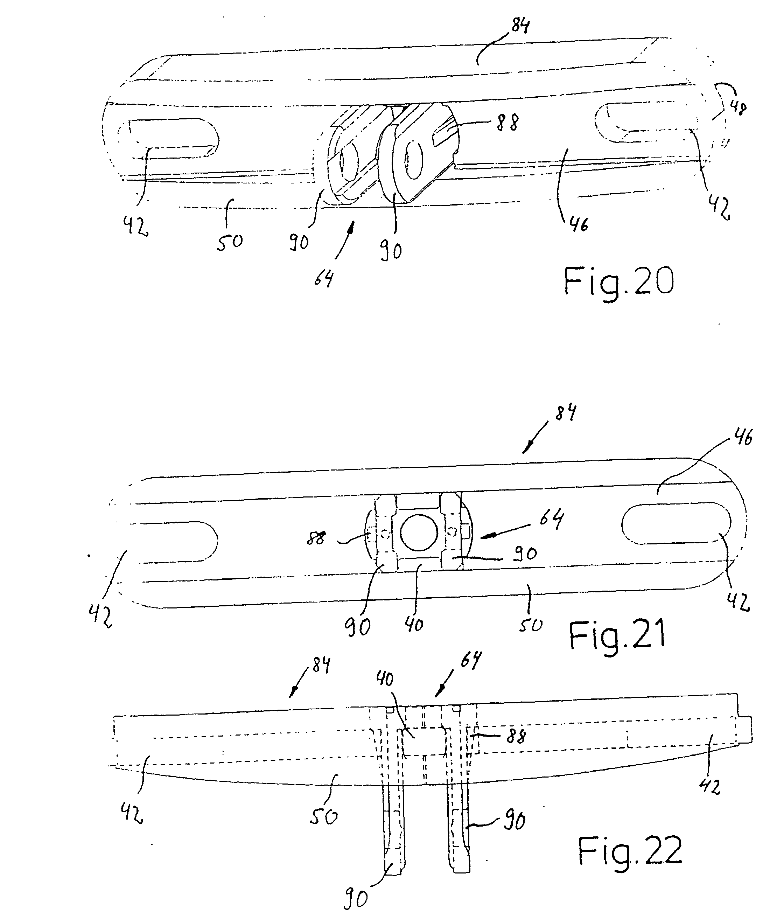

Unter Bezug auf die Fig. 20 bis 27 wird im weiteren näher im Detail die Realisierung des erfindungsgemäßen Trägerstücks (Mastbride) beschrieben, die sich -- über die Verwendung mit Aufnahmehalter 12 bzw. Verbindungsstück der vorbeschriebenen Ausführungsformen hinaus, auch zum unmittelbaren Aufnehmen eines Gabel- bzw. Lappen-/Laschenstücks eignet.

Wie in den Darstellungen der Fig. 20 bis 26 zu erkennen ist, unterscheidet sich das Trägerstück 84 gemäß der vierten Ausführungsform von dem im Zusammenhang mit der ersten bzw. zweiten Ausführungsform beschriebenen Trägerstück 28 lediglich dadurch, daß das Element 84 in seinem rückwärtigen Bereich keinen Vertikalschlitz (vertikale Ausnehmung) 32 aufweist, sondern vielmehr an seiner Rückseite plan ist; dies ist auch unmittelbar einleuchtend, als die vierte Ausführungsform der Fig. 20 bis 27, die einerseits unmittelbar am Tragmast befestigt ist und andererseits mittels Gabel 64 oder Lappen die Verbindung zum Druck-Strebenrohr herstellt, keine zusätzliche Halteranordnung benötigt.

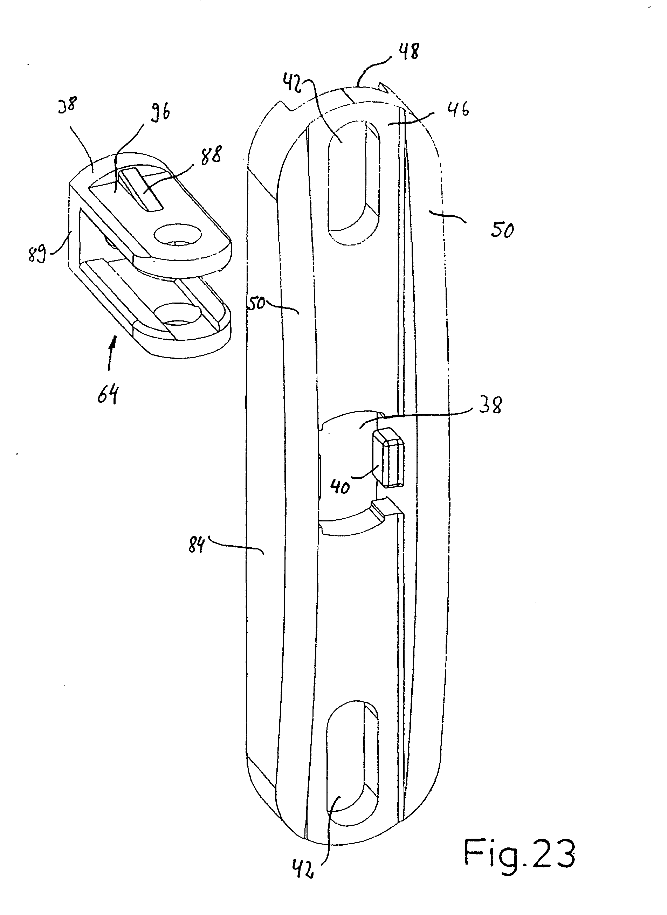

Vielmehr wird, wie aus den Explosionsdarstellungen der Fig. 23 (für das Gabelstück 64) bzw. 27 (für ein Lappen- bzw. Laschenelement 86) gezeigt, das jeweilige Kupplungsstück unmittelbar in den mittleren Durchbruch 38 des Trägerstücks 84 eingesetzt und dort mittels der verjüngten Seitenabschnitte 50 des einstückigen Elements formschlüssig geklemmt.

Im Fall des Gabelstücks 64 (Fig. 20 bis 23) ist erkennbar, daß hier die äußeren Schenkel 90 im eingesetzten Zustand des Gabelstücks 64 dieses an den geraden Stirnflächen des Durchbruchs 38 fixieren, während die noppenartigen Vorsprünge 40 zwischen die Schenkel 90 greifen und dort in Kontakt mit innenliegenden, profilierten Abschnitten der Schenkel 90 stehen.

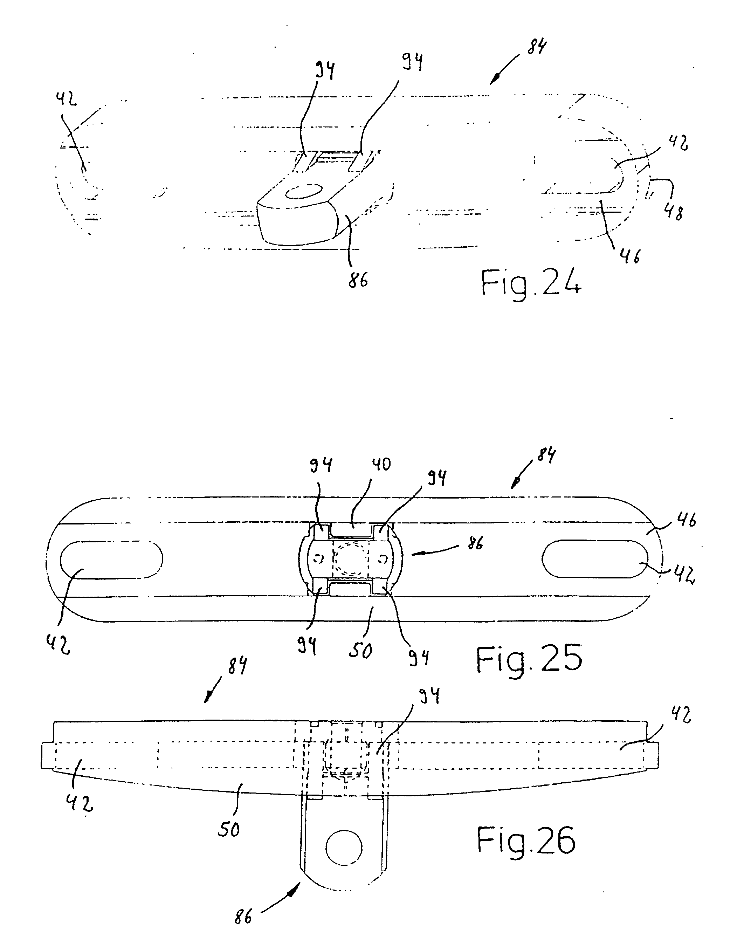

Dagegen berühren im Fall des Lappen- bzw. Laschenelements 86 (Fig. 24 bis 27) seitliche Stege 94 des Lappenelements 86 die Querfläche des Durchbruchs 38 beidseits der noppenartigen Vorsprünge 40, und der stirnseitig gerundete Zungenabschnitt 96 ist mit seiner Außenkontur an die Stirnseiten des Durchbruchs 38 angepaßt.

Damit ist für beide Verbindertypen -- sowohl Gabelstück 64 als Lappen-/Laschenelement 86 -- stets eine optimale, verdrehsichere, klemmende und mechanisch stabile Verbindung mit dem Trägerstück 84 (bzw. dem Trägerstück 28 der ersten und zweiten Ausführungsform) möglich, und die Anordnung wird damit für alle möglichen Einsatzzwecke universell einsetzbar, insbesondere auch, wie im Zusammenhang mit der vierten Ausführungsform diskutiert, für Kupplungszwecke, bei denen zusätzliche Freiheitsgrade, realisiert durch ein Drehgelenk wie bei der ersten und zweiten Ausführungsform, nicht erforderlich sind, und damit das Druckrohr unmittelbar mit dem Trägerstück und damit dem Haltemast zusammenwirken kann.

Wiederum tritt hier der vorteilhafte Effekt auf, daß die Kupplungselemente allein durch die im Bclastungsfall auftretenden Kräfte sicher fixiert werden und damit weitere Verbindungselemente, wie Schraubverbindung od. dgl., überflüssig werden.

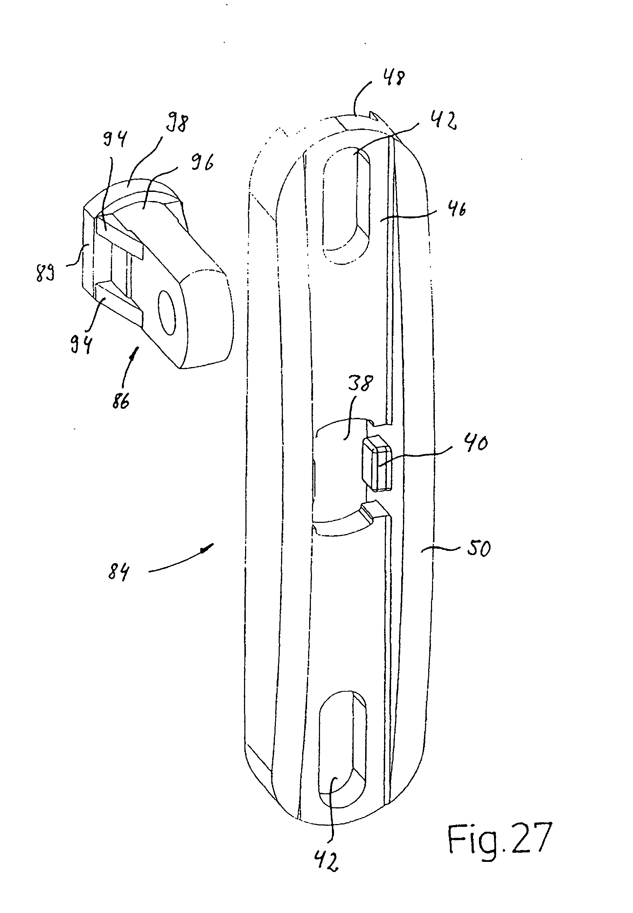

Die Draufsichten der Fig. 22 bzw. 26 offenbaren weitere konstruktive Details des Trägerstücks 84, so ist insbesondere hier deutlich der kreisbogenförmige Verlauf der in den Darstellungen nach vorn weisenden Kanten auf einer Seite der Seitenabschnitte 50 zu erkennen; auch ergeben sich Position und (Relativ-) Abmessungen der Langlöcher 42 aus diesen Darstellungen. Schließlich ist gut erkennbar, daß endseitig das Trägerstück 84 wiederum beidseitig gerundet ist.

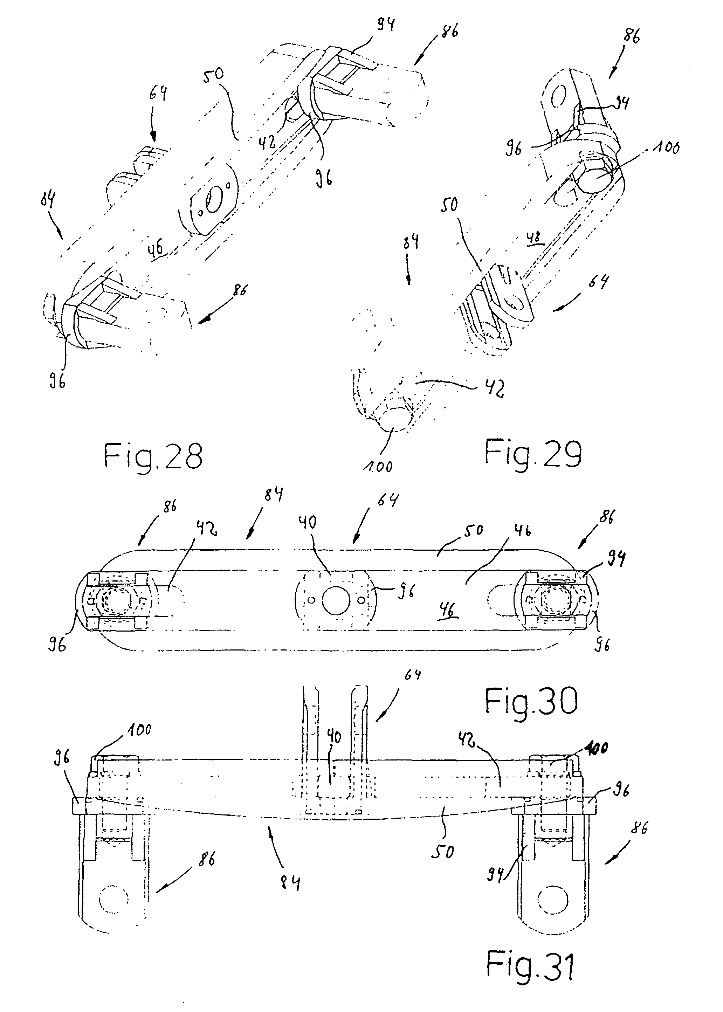

Unter Bezug auf die Fig. 28 bis 36 wird als fünfte Ausführungsform eine Weiterbildung der Anordnung der vierten Ausführungsform beschrieben, wobei hier das Trägerstück 84 endseitig mit einem Paar zusätzlicher Gabel- bzw. Lappen-/Laschenabschnitte versehen wird.

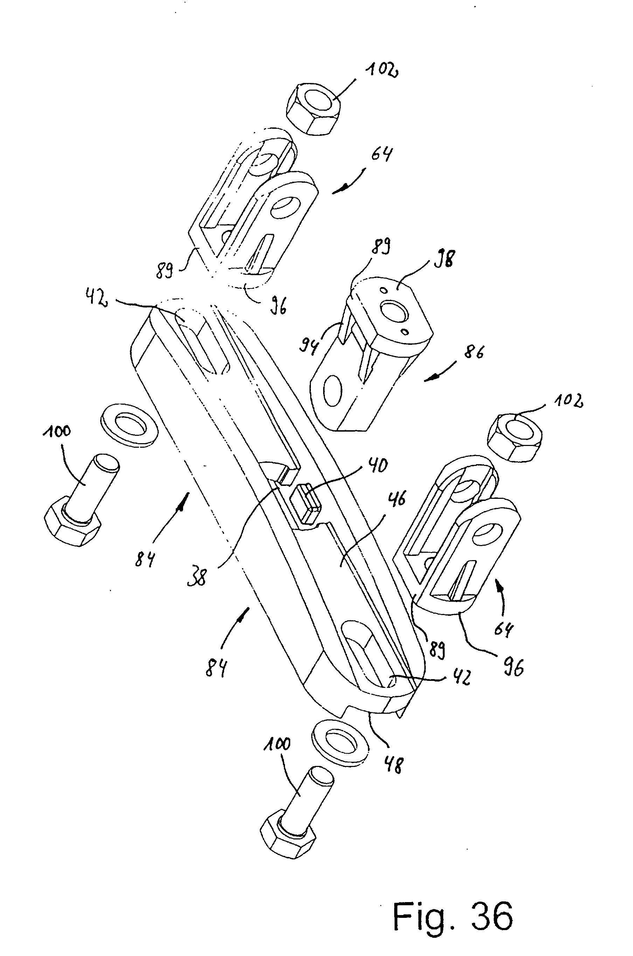

Wie zur besten Übersichtlichkeit in der Fig. 36 gezeigt, durchgreift hier ein Lappenelement 86 (alternativ, vgl.

Fig. 28 bis 31, ein Gabelelement) den Durchbruch 38 und ist in der vorbeschriebenen Weise fixiert; im Gegensatz zu der vorbeschriebenen Ausführungsform wird das Element 86 jedoch von der entgegengesetzten Richtung durch den Durchbruch 38 geführt.

Gut erkennbar ist, wie der beidseits abgeflachte Sockelabschnitt 89 des Lappenelements 86 in die Längsschlitze 46 bzw. 48, mittels der Flachabschnitte verdrehsicher, eingepaßt ist.

Entsprechendes gilt für die in Fig. 36 zusätzlich randseitig in den Langlöchern 42 verankerten Gabelstücke 64, die mittels Schrauben 100 so -- verdrehsicher im Längsschlitz gehalten -- eingeschraubt werden, daß die jeweilige Gabelöffnung sich entgegen des durch den Durchbruch 38 geführten Zungenabschnitts 96 des Lappenelements 86 erstreckt.

Diese Anordnung beschreibt die Möglichkeit, mittels der beidends am Trägerstück 84 vorgesehenen Langlöcher 42 eine flexible, verstellbare Verbindung zu weiteren Elementen, etwa zu Spurhalterohren, herzustellen, wobei derartige Teile üblicherweise auf Zug belastet sind.

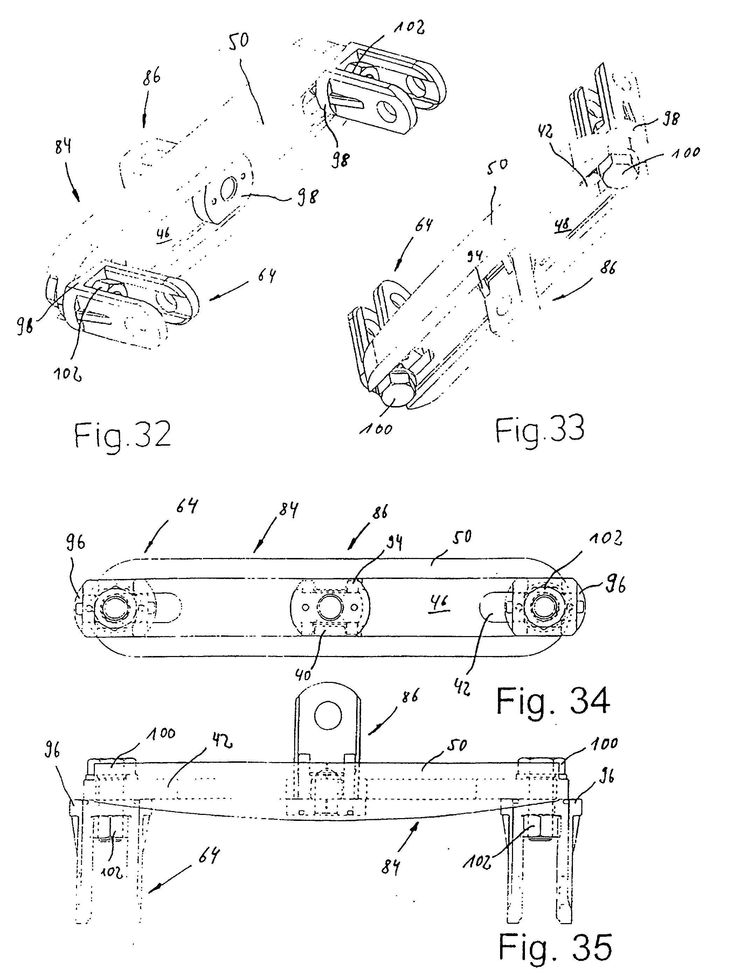

Während die Fig. 32 bis 36 zu dieser fünften Ausführungsform eine Anordnung aus zentralem Lappenelement 86 und zwei zusätzlichen, verschraubten Gabelstücken 69 beschreibt, ist äquivalent aus den Fig. 28 bis 31 erkennbar, daß beliebige andere Kombinationen möglich sind, so etwa ein zentrales Gabelstück 64, auf die vorbeschriebene Weise drehsicher im Durchbruch 38 verklemmt, zusammen mit einem Paar endseitiger, verschraubter Laschenelemente 86.

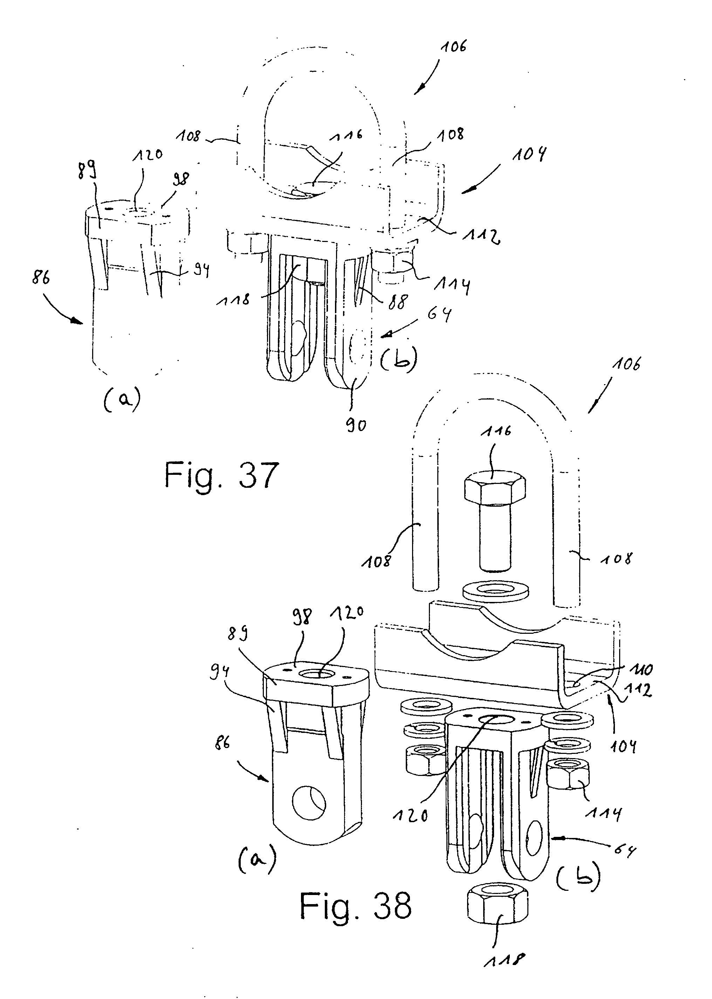

Die Fig. 37 bis 40 verdeutlichen als sechste Ausführungsform der vorliegenden Erfindung die Möglichkeit, eine Kupplung zwischen zwei Rohren herzustellen; wiederum wird der prinzipielle Aufbau dieses Rohrverbinders, der sich insbesondere zur Verwendung mit den vorbeschriebenen Systemelementen eignet, anhand der Explosionsdarstellung in Fig. 38 beschrieben.

Ein mit zwei kreisabschnittsförmigen Rundungen, angepaßt an den Außendurchmessers des aufzunehmenden Rohres, versehenes U-Profil 104 ist zum Zusammenwirken mit einem den Umfang des Rohres umschließenden Bügelstück 106 so vorgesehen, daß das Bügelstück 106 mit seinen freien, ein Außengewinde tragenden Enden 108 durch seitliche Durchbrüche 110 in einer mittleren Bodenfläche 112 des Profils 104 hindurchgreifen kann und mittels Muttern 114 verspannt wird; in einer montierten Position wird dann ein Rohr zwischen Bügelstück 108 und den Ausnehmungen im U-Profil 104 klemmend verspannt. An der dem Bügel 106 entgegengesetzten Seite des Profils 104 ist ein Gabelstück 64 bzw. ein Lappen-/Laschenelement 86 aufgesetzt, wobei im Fall des Gabelstücks und Lappen-/Laschenelementes diese durch eine Schraubenkombination durch einen weiteren Durchbruch in der Bodenfläche 112 hindurch mit dem Profil 104 verschraubt sind, während die Schraube 116 direkt in ein in den Sockelabschnitt 98 des Elements geschnittenes Innengewinde 120 eingreift.

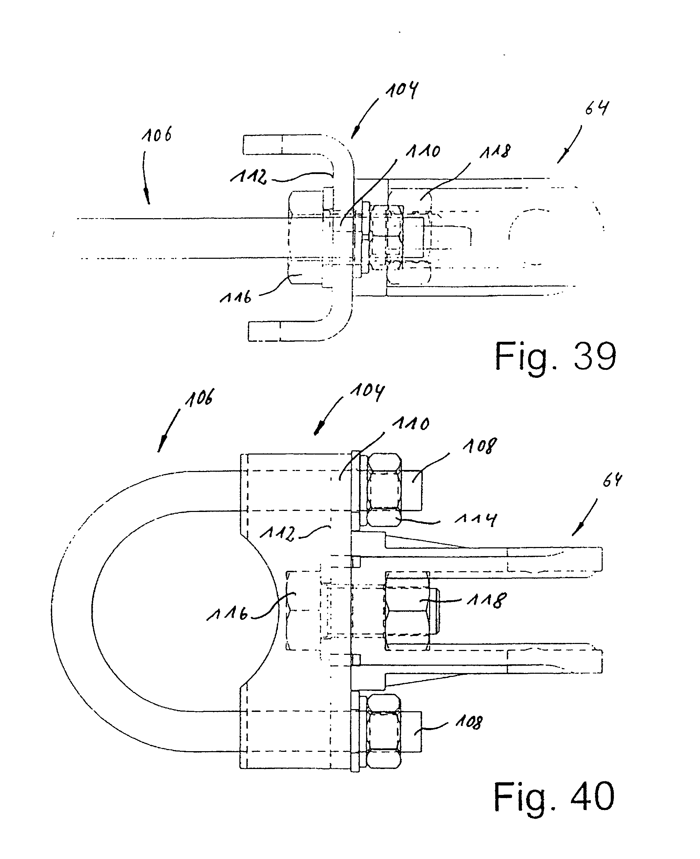

Die Fig. 39 und 40 verdeutlichen weitere konstruktive Details dieser Ausführungsform, wobei insbesondere deutlich wird, daß das U-Profil 104 in besonders geeigneter Weise durch ein gebogenes Blechstück, in welches dann die kreisbogenförmigen Ausschnitte gefräst werden, realisiert werden kann.

Ergänzend ist vorgesehen, daß insbesondere in der bodenseitigen Fläche des Sockelabschnitts 98 von Lappenelement 86 bzw. Gabelstück 64 zusätzlich Vertiefungen bzw. Bohrungen seitlich vorgesehen sind, die mit Stiften od. dgl. Sicherungselementen, die fluchtend durch die Bodenfläche 112 des U-Profils 104 gebracht werden, zusammenwirken.

Durch die beschriebene Anordnung ist damit eine im konstruktiven Aufbau und Handhabung einfache und dennoch mechanische stabile Verbindung zwischen zwei Rohren realisierbar, die insbesondere im vorliegenden Fall zur Befestigung von Auslegerrohr mit einer Druckstrebe bzw. zwischen Druckstrebe und Tragrohr eingesetzt wird.

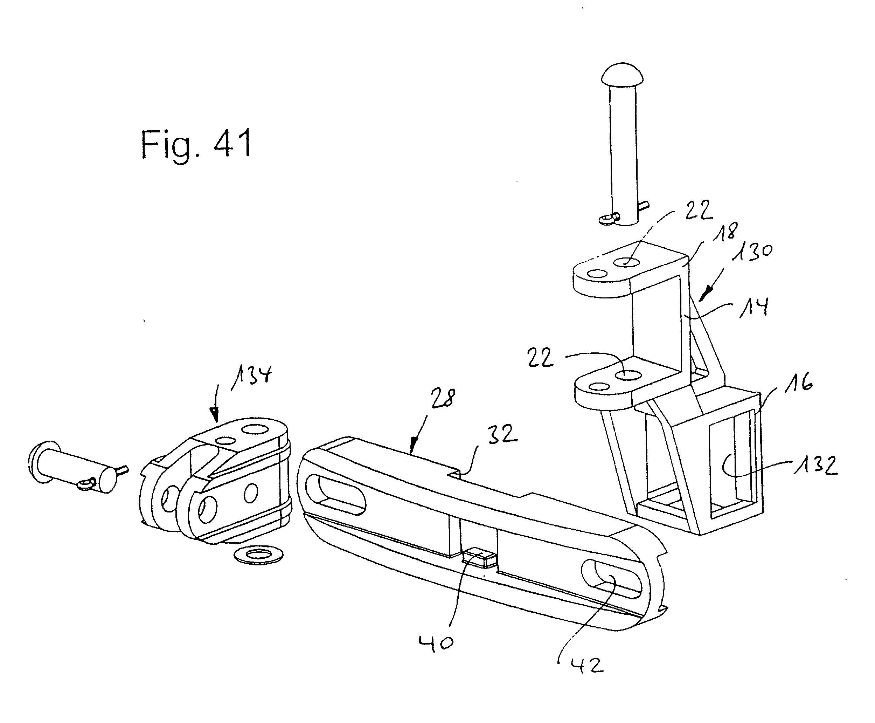

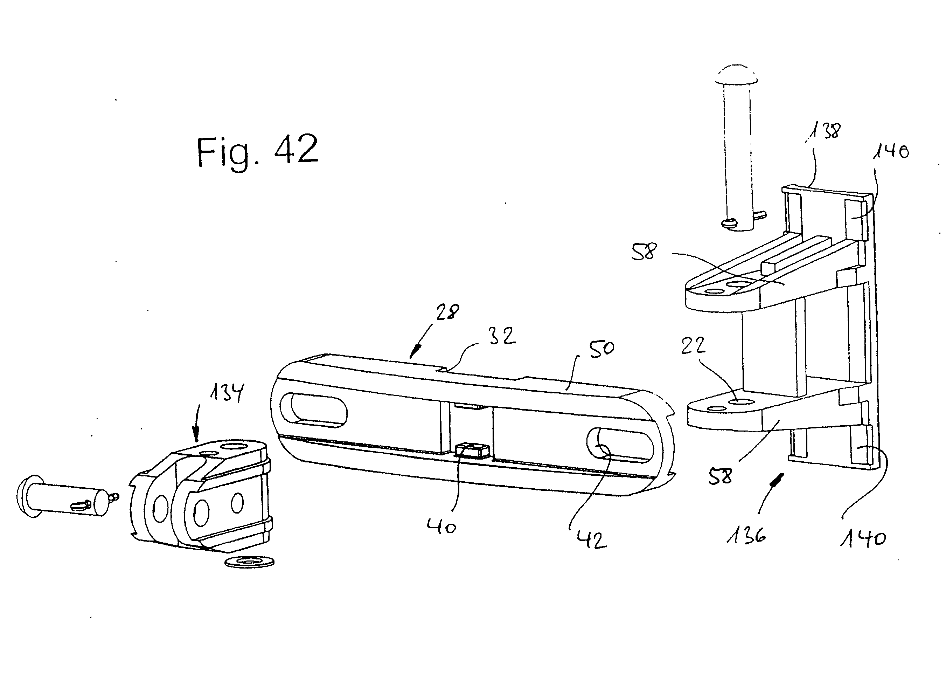

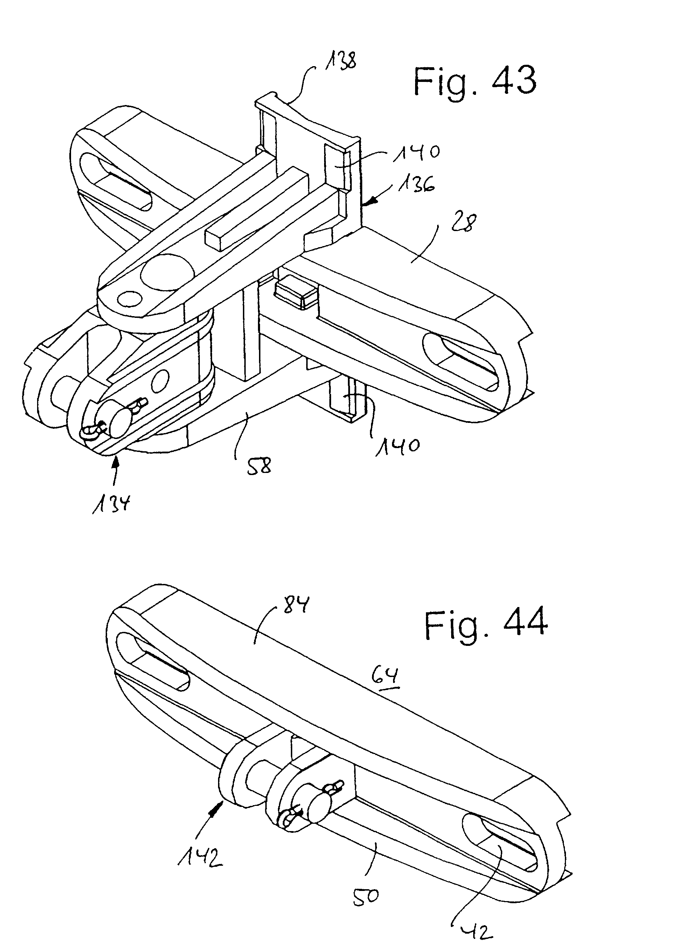

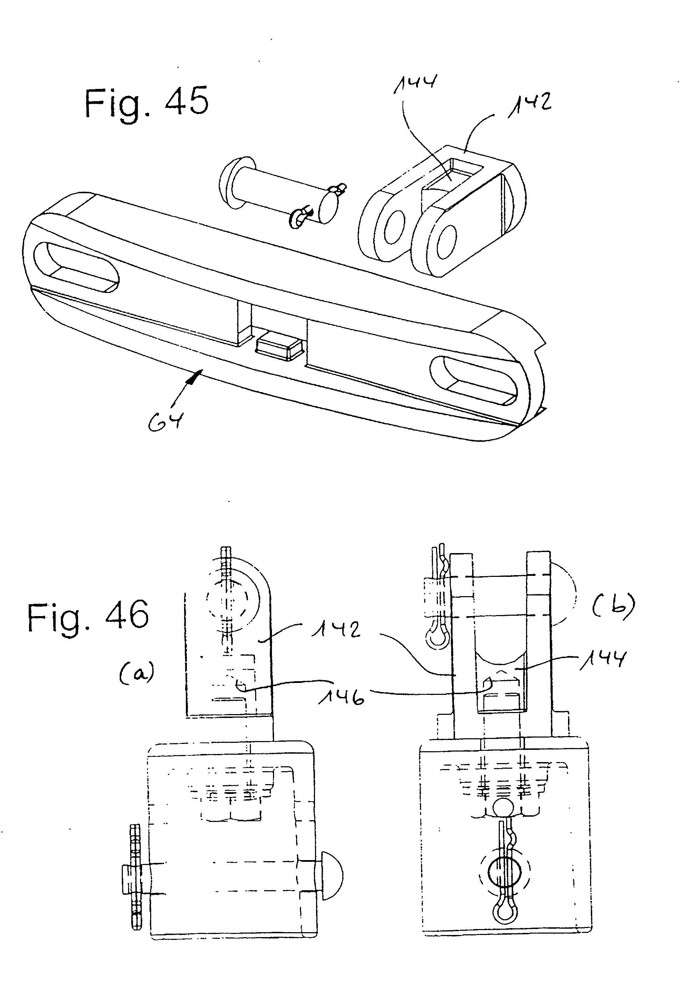

Unter Bezug auf die Figuren 41 bis 46 wird nunmehr eine siebte und achte Ausführungsform der Erfindung beschrieben, die insoweit als vorteilhafte Abwandlungen der im Zusammenhang mit den Figuren 6, 7 und 12 beschriebenen gelten sollen und als beste Ausführungsform der Erfindung (best mode) zu verstehen sind. Bei den Figuren 41 bis 46 werden dabei unveränderte, gleichbleibende Abschnitte bzw. Elemente mit identischen Bezugszeichen der jeweils analogen Figuren 6 (zu Fig. 41), 12 (zu Fig. 42), 7 (zu Fig. 43), 20 (zu Fig. 44), 23 (zu Fig. 45) sowie 17 (zu Fig. 46) verwendet, und lediglich abweichende Merkmale werden neu bezeichnet.

Wie insbesondere aus der Darstellung der Fig. 41 erkennbar ist, wird, in Abwandlung der Ausführungsform gem. Fig. 6, ein alternativer Aufnahmehalter 130 gegenüber dem Aufnahmehalter 12 der Fig. 6 so ausgebildet, dass der Aufnahmeabschnitt 16 eine offene Rückwand 132 aufweist, so dass diese Ausführungsform insbesondere auch ohne Vorsprung 36, wie in Fig. 6 gezeigt, auskommt. Die Verbindung mit dem Trägerstück 28 erfolgt in analoger Weise durch Einführen in den Aufnahmeabschnitt; die Relativfixierung bei Zugbelastung der Anordnung entsteht hier jedoch ausschließlich durch Eingreifen des rückwärtigen Bereiches des Aufnahmeabschnittes 16 in die Ausnehmungen 32 des Trägerstücks 28. Insoweit ist die konstruktive Realisierung des Aufnahmehalters 12 als Kupplungselement im Rahmen der Erfindung gegenüber der ersten Ausführungsform konstruktiv vereinfacht.

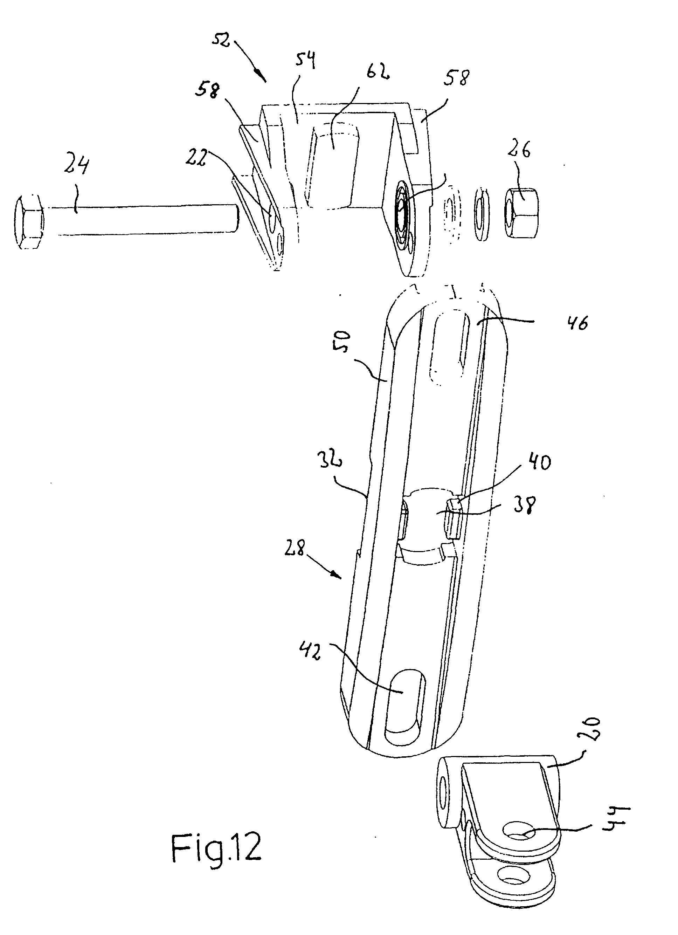

Die Figur 41 -- wie auch die Weiterbildung der achten Ausführungsform gem. Fig. 42 -- zeigt darüber hinaus eine leicht abgeänderte Ausbildung des Gelenkstückes 134 (Bezugszeichen 20 in Fig. 6 bzw. in Fig. 12), wobei diese funktionell jedoch übereinstimmen. Wie sich zudem aus den Zeichnungen ergibt, ist die in den Figuren 6 bzw. 12 gezeigte Mutter- und Schraubkombination durch eine Bolzen-Splintkombination mit ansonsten gleicher Wirkung ersetzt.

Analog der Ausbildung gem. Fig. 41 zeigt die Fig. 42 einen kompakteren Aufnahmehalter 136, der, wie auch das einstückige Element 130, keinen rückwärtigen Vorsprung (wie etwa in Fig. 12 mit dem Bezugszeichen 62 gezeigt) aufweist.

Als weiteres, vorteilhaftes Merkmal dieser Ausführungsform -- auch bei der siebten Ausführungsform gem. Fig. 41 zu realisieren -- weist der Aufnahmehalter 136 an seiner Rückseite einen stumpfen, V-förmigen Ausschnitt 138 auf (vgl. auch die Montagedarstellung der Fig. 43), wobei dieser Ausschnitt die unmittelbare Montage der Anordnung an einem Rohr, einem Mast oder dergleichen in Vertikalrichtung ermöglicht. Zu diesem Zweck würde mit geeigneten Befestigungsmitteln, etwa (in den Figuren nicht gezeigten) Bändern, eine Fixierung so erfolgen, dass der Aufnahmehalter 136 mit den rückwärtigen Ausnehmungen 138 fest an einem Längsdreher (Mast, Rohr) ansetzt, und den Mast oder das Rohr umschlingende Befestigungsbänder oder dergl. dann zur Fixierung über Befestigungsabschnitte 140 des Aufnahmehalters 136 greifen. Auf diese Weise ist eine besonders einfache, schnelle und dennoch feste Fixierung der Aufnahmehalter unmittelbar an einem Mast möglich, wobei zudem der Ausschnitt 138 nicht nur für eine genaue Fixierung, sondern zudem auch für eine Anpassbarkeit an verschiedene Mast- bzw. Rohrdurchmesser sorgt.

Die Figuren 44 bis 46 verdeutlichen im Rahmen der vorliegenden Erfindung eine besondere Ausbildung des Gabelstücks 64: ein Gabelstück 142, welches ansonsten wie vorstehend beschrieben ausgebildet ist, weist anstelle einer Bohrung im mittleren Verbindungsbereich 144 ein Innengewinde 146 auf, durch welches dann, vergl. die Darstellung der Fig. 46, eine vereinfachte Befestigung an einem Rohradapter lediglich durch Einsetzen einer Mutter von der Innenseite her möglich ist.

Im Rahmen der vorliegenden Erfindung sind die Weiterbildungen bzw. alternativen Ausführungsformen der Fig. 41 bis 46 auch mit sämtlichen vorbeschriebenen Ausführungsformen kombinier- bzw. ersetzbar, so dass die erfindungsgemäße Befestigungsanordnung um zusätzliche Funktionalität und Flexibilität erweitert wird.

Im Ergebnis ermöglicht damit die vorliegende Erfindung, im Wege eines Baukastensystems in konstruktiv einfacher und bedienungstechnisch günstiger Weise ein Montage-, Halteund Isolationssystem zu realisieren, welches insbesondere für flexible Anwendungen mit einem Minimum an konstruktiven Einzelelementen die Anpassung an die verschiedensten Halteund Isolationsbedingungen erlaubt. Durch die flexible Konfigurierbarkeit der verschiedenen Elemente kann damit der Systempreis beträchtlich gesenkt werden, da entsprechend die Anzahl zur fertigender und vorzuhaltender Baugruppen und Komponenten sinkt. Darüber hinaus ermöglichen die mechanisch stabil und konstruktiv einfach ausgestalteten Bauelemente, voran das Trägerstück, selbst starken Belastungen gerecht zu werden, ohne daß etwa zusätzlicher Verbindungsaufwand, der sich in entsprechender Montage niederschlagen würde, notwendig wird.

Die vorliegende Erfindung ist nicht auf die beschriebenen Ausführungsformen, die in beliebiger Kombination aneinandergefügt oder miteinander verbunden werden können, beschränkt; vielmehr liegt es im Umfang einer Erfindung, auch andere Bauformen, Materialien oder Verbindungswege einzubeziehen.

## Patentansprüche

1. Träger- und Befestigungsanordnung für Fahrdrähte mit einem bevorzugt einstückigen, langgestreckten Trägerstück (28, 84), das mittels geeigneter Befestigungsmittel (42, 64, 86) an einem Mast, einem Rohr, einer Hauswand oder dgl. fixierbar ist, und mit einem Kupplungselement (12, 52, 64, 86; 130, 138) zum Verbinden des Trägerstücks (28) mit einem Strebenrohr od. dgl., **dadurch gekennzeichnet, dass** das Trägerstück (28) einen bevorzugt zentralen, ersten Durchbruch und/oder Ausschnitt (38) aufweist, der zum Zusammenwirken mit einem angepassten Verbindungsabschnitt (36, 132) des Kupplungselements vorgesehen und zum Herstellen einer steckbaren, lösbaren, verdrehgesicherten, bei Zugund/oder Druckbelastung fixierten Verbindung ausgebildet ist.

2. Anordnung nach Anspruch 1, **dadurch gekennzeichnet, dass** das Trägerstück ein zumindest abschnittsweise doppel-T-förmig ausgebildetes Profil aufweist, das beidseits eines vorderen (46) und eines rückwärtigen (48) Längsschlitzes ein Paar von Seitenabschnitten (50) mit in Erstreckungsrichtung der Längsschlitze (46, 48) gerundetem Kantenverlauf aufweist.

3. Anordnung nach Anspruch 1 oder 2, **dadurch gekennzeichnet, daß** das Trägerstück endseitig, zumindest einends, ein Langloch (42) aufweist, das einen in der Ebene des ersten Durchbruchs (38) liegenden zweiten Durchbruch ausbildet.

4. Anordnung nach einem der Ansprüche 1 bis 3, **dadurch gekennzeichnet, daß** das Trägerstuck im Bereich des ersten Durchbruchs eine Ausnehmung aufweist, die sich bevorzugt senkrecht zur Erstreckungsrichtung des Trägerstücks erstreckt und so ausgebildet ist, daß in einem Verbindungszustand mit dem Kupplungselement ein Abschnitt des Kupplungselements in die Ausnehmung eingreift und das Kupplungselement zusätzlich fixiert.

5. Anordnung nach einem der Ansprüche 1 bis 4, **dadurch gekennzeichnet, daß** das Kupplungselement als Aufnahmehalter (12) für das Trägerstück (28) ausgebildet ist und einen Aufnahmeabschnitt (16) zum Einschieben und formschlüssigen Halten des Trägerstücks sowie einen daran ansitzenden Gelenkabschnitt (14) zum Verbinden mit einem Strebenrohr (10) aufweist.

6. Anordnung nach Anspruch 5, **dadurch gekennzeichnet, daß** der Aufnahmeabschnitt und der Gelenkabschnitt einstückig ausgebildet sind.

7. Anordnung nach Anspruch 5 oder 6, **dadurch gekennzeichnet, daß** das Kupplungselement als jochförmiger Halter (52) ausgebildet ist, der zur Realisierung des Aufnahmeabschnitts das Trägerstück (28) im Bereich des ersten Durchbruches U-förmig umschließt und zur Realisierung des Gelenkabschnittes zum Aufnehmen eines Drehgelenkstücks (20) an offenen Schenkelenden (58) des Halters (52) ausgebildet ist.

8. Anordnung nach einem der Ansprüche 1 bis 7, **gekennzeichnet, durch** ein U-förmiges Gabelelement (64), das so ausgebildet ist, daß es mit einem mittleren Verbindungsabschnitt (89) sowohl verdrehsicher in Längsschlitze (46, 48) des Trägerstücks (28) einsetzbar, als auch mittels eines Muffenelements (70) an einem Rohrende fixierbar ist.

9. Anordnung nach Anspruch 8, **dadurch gekennzeichnet, daß** freie Schenkel (90) des Gabelelements (64) so bemessen sind, daß diese in einem montierten Zustand durch den ersten Durchbruch (38) und/oder die Längsschlitze hindurchragen und das Gabelelement bei Zugbelastung relativ zum Trägerstück (28) verdrehsicher fixieren.

10. Anordnung nach einem der Ansprüche 1 bis 9, **gekennzeichnet durch** ein Laschenelement (86), das so ausgebildet ist, daß es sowohl verdrehsicher in Längsschlitze (46, 48) des Trägerstücks (28) einsetzbar, als auch mittels eines Muffenelements (70) an einem Rohrende fixierbar ist.

11. Anordnung nach Anspruch 10, **dadurch gekennzeichnet, daß** ein Laschenabschnitt des Laschenelements (86) so bemessen ist, daß dieser in einem montierten Zustand durch den ersten Durchbruch und/oder die Längsschlitze hindurchragt und das Laschenelement bei Zugbelastung relativ zum Trägerstück (28) verdrehsicher fixiert.

12. Anordnung nach einem der Ansprüche 1 bis 11, **dadurch gekennzeichnet, daß** das Trägerstück (28) zum gemeinsamen Zusammenwirken mit mindestens einem Gabelelement nach Anspruch 10 und mindestens einem Laschenelement nach Anspruch 12 ausgebildet ist.

13. Anordnung nach einem der Ansprüche 8 bis 12, **dadurch gekennzeichnet, dass** das Gabelelement und/oder das Laschenelement bodenseitig ein Innengewinde (146) aufweist.

## Claims

1. Carrying and fastening arrangement for contact wires with a carrier piece (28, 84), preferably in one piece and elongated, which can be fixed, by means of suitable fastening means (42, 64, 86), to a mast, a pipe, a house wall or similar, and with a coupling element (12, 52, 64, 86; 130, 138) for connecting the carrier piece (28) to a brace pipe or similar, **characterised in that** the carrier piece (28) has a, preferably central, first opening and/or cutout (38), provided to cooperate with a matching connecting section (36, 132) of the coupling element and to produce a plug-in, detachable connection, secured against rotation and fixed under tensile or pressure load.

2. Arrangement according to claim 1, **characterised in that** the carrier piece has a profile constructed, at least in some sections, as a double T-shape, which, on both sides of a front (46) and a rear (48) longitudinal slot, has a pair of side sections (50) with a rounded edge course in the direction of extension of the longitudinal slots (46, 48).

3. Arrangement according to claim 1 or 2, **characterised in that** the carrier piece has on the end, at least on one end, an elongated hole (42) forming a second opening, located in the plane of the first opening (38).

4. Arrangement according to one of claims 1 to 3, **characterised in that** the carrier piece has in the area of the first opening a recess, which extends preferably perpendicular to the direction of extension of the carrier piece and is constructed in such a way that in a connecting state with the coupling element one section of the coupling element engages in the recess and additionally fixes the coupling element.

5. Arrangement according to one of claims 1 to 4, **characterised in that** the coupling element is constructed as receiving holder (12) for the carrier piece (28) and has a receiving section (16) for inserting and interlocking holding of the carrier piece and also an articulated section (14) fitting on to it for connecting to a brace pipe (10).

6. Arrangement according to claim 5, **characterised in that** the receiving section and the articulated section are constructed in one piece.

7. Arrangement according to claim 5 or 6, **characterised in that** the coupling element is constructed as a yoke-shaped holder (52), which to produce the receiving section surrounds the carrier piece (28) in a U-shape in the area of the first opening and to produce the articulated section is constructed to receive a rotary joint piece (20) on open ends of legs (58) of the holder (52).

8. Arrangement according to one of claims 1 to 7, **characterised by** a U-shaped fork element (64) which is constructed in such a way that with a central connecting section (89) it can both be inserted as secure against rotation into longitudinal slots (46, 48) of the carrier piece (28) and fixed on one end of a pipe by means of a sleeve element (70).

9. Arrangement according to claim 8, **characterised in that** open legs (90) of the fork element (64) are dimensioned in such a way that in a mounted state they project through the first opening (38) and/or the longitudinal slots and fix the fork element as secure against rotation relative to the carrier piece (28) under tensile load.

10. Arrangement according to one of claims 1 to 9, **characterised by** a bracket element (86) which is constructed in such a way that it can both be inserted as secure against rotation in longitudinal slots (46, 48) of the carrier piece (28) and fixed on one end of a pipe by means of a sleeve element (70).

11. Arrangement according to claim 10, **characterised in that** one bracket section of the bracket element (86) is dimensioned in such a way that in a mounted state it projects through the first opening and/or the longitudinal slots and the bracket element is fixed as secure against rotation relative to the carrier piece (28) under tensile load.

12. Arrangement according to one of claims 1 to 11, **characterised in that** the carrier piece (28) is constructed for mutual cooperation with at least one fork element according to claim 10 and at least one bracket element according to claim 12.

13. Arrangement according to one of claims 8 to 12, **characterised in that** the fork element and/or the bracket element has an inner thread (146) on the floor side.

## Revendications

1. Dispositif support et de fixation pour des fils de contact avec un élément support (28, 84) allongé, de préférence d'une seule pièce, pouvant être fixé à l'aide de moyens de fixation (42, 64, 86) appropriés sur un mât, un tube, un mur de maison ou analogue, et avec un élément d'accouplement (12, 52, 64, 86; 130, 138) pour assurer la liaison de l'élément support (28) à un tube d'entretoisement ou analogue, **caractérisé en ce que** l'élément support (28) présente un premier passage et/ou découpure (38), de préférence central(e), prévue pour coopérer avec un tronçon de liaison (36, 132) adapté de l'élément d'accouplement et est réalisé pour établir une liaison fixe en cas de charge de traction et/ou de compression, assurée en rotation, désolidarisable, enfichable.

2. Dispositif selon la revendication 1, **caractérisé en ce que** l'élément support présente un profil réalisé, au moins par tronçons, en forme de double T, présentant, des deux côtés d'une fente longitudinale avant (46) et d'une fente longitudinale arrière (48), une paire de tronçons latéraux (50) ayant une allure d'arrête arrondie dans la direction d'extension des fentes longitudinales (46, 48).

3. Dispositif selon la revendication 1 ou 2, **caractérisé en ce que** l'élément support présente, côté exrrémité, au moins à une extrémité un trou oblong (42) qui forme un deuxième passage placé dans le plan du premier passage (38).

4. Dispositif selon l'une des revendications 1 à 3, **caractérisé en ce que** l'élément support présente, dans la zone du premier passage, un évidement, qui s'étend de préférence perpendiculairement à la direction d'extension de l'élément support et est conformé de manière que, à l'état relié à l'élément d'accouplement, un tronçon de l'élément d'accouplement s'engage dans l'évidement et assure une fixation supplémentaire à l'élément d'accouplement.

5. Dispositif selon l'une des revendications 1 à 4, **caractérisé en ce que** l'élément d'accouplement est conformé sous la forme de support de réception (12) pour l'élément support (28) et présente un tronçon de logement (16), pour l'enfilage et le maintien par une liaison à ajustement de forme de l'élément support, ainsi qu'un tronçon d'articulation (14), monté dessus pour assurer la liaison à un tube d'entretoisement (10).

6. Dispositif selon la revendication 5, **caractérisé en ce que** le tronçon de logement et le tronçon d'articulation sont réalisés d'une seule pièce.

7. Dispositif selon la revendication 5 ou 6, **caractérisé en ce que** l'élément d'accouplement est réalisé sous la forme d'un support (52) en forme d'un triangle, entourant en forme de U pour réaliser le tronçon de logement (28) dans la zone du premier passage, et configuré pour réaliser le tronçon d'articulation devant recevoir un élément d'articulation toummante (20) sur des extrémités de branche (58) ouvertes du support (52).

8. Dispositif selon l'une des revendications 1 à 7, **caractérisé par** un élément de fourche (64) en forme de U, configuré de manière à pouvoir tant être inséré par un tronçon de liaison (89) central de façon assujettie en rotation dans des fentes longitudinales (46, 48) de l'élément support (28), que de pouvoir également être fixé sur une extrémité de tube, à l'aide d'un élément de manchon (70).

9. Dispositif selon la revendication 8, **caractérisé en ce que** des branches libres (90) de l'élément de fourche (64) sont dimensionnées de manière à pénétrer à l'état monté à travers le premier passage (38) et/ou les fentes longitudinales et fixer de façon assujettie en rotation l'élément de fourche, en cas de sollicitation en traction par rapport à l'élément support (28).

10. Dispositif selon l'une des revendications 1 à 9, **caractérisé par** un élément formant patte (86), réalisé de manière à tant pouvoir être inséré de façon assujettie en rotation dans les fentes allongées (46, 48) de l'élément support (28), qu'également pouvoir être fixé sur une extrémité de tube, à l'aide d'un élément de manchon (70).

11. Dispositif selon la revendication 10, **caractérisé en ce qu'**un tronçon de patte de l'élément de patte (86) est dimensionné de manière à ce qu'il pénètre à l'état monté dans le premier passage et/ou les fentes allongées et que l'élément formant patte soit fixé de façon assujettie en rotation en cas de sollicitation en traction, par rapport à l'élément support (28).

12. Dispositif selon l'une des revendications 1 à 11, **caractérisé en ce que** l'élément support (28) est réalisé pour coopérer, conjointement avec au moins un élément de fourche selon la revendication 10 et au moins un élément formant patte selon la revendication 12.

13. Dispositif selon l'une des revendications 8 à 12, **caractérisé en ce que** l'élément formant fourche et/ou l'élément formant patte présente(nt), côté fond, un taraudage (146).
